# EUROPÄISCHE PATENTSCHRIFT

(11) **EP 2 812 162 B1**
(45) Veröffentlichungstag und Bekanntmachung des Hinweises auf die Patenterteilung: **17.01.2018**
(21) Anmeldenummer: 13706185.9
(22) Anmeldetag: 05.02.2013
(51) Int. Cl.: B25J 15/04, B25J 19/00

(54) **KUPPLUNGSEINRICHTUNG**
COUPLING DEVICE
DISPOSITIF D'ACCOUPLEMENT

(30) Priorität: 06.02.2012 DE 202012100384 U
(43) Veröffentlichungstag der Anmeldung: 17.12.2014
(73) Patentinhaber: KUKA Systems GmbH, 86165 Augsburg (DE)
(72) Erfinder: NEIDER, Reinhold, 86462 Langweid (DE)
(74) Vertreter: Ernicke, Klaus Stefan
(86) Internationale Anmeldenummer: PCT/EP2013/052221
(87) Internationale Veröffentlichungsnummer: WO 2013/117535

(56) Entgegenhaltungen:
- EP-A1- 1 358 973
- EP-A1- 1 582 314
- EP-A1- 1 970 170
- EP-A2- 0 151 819
- DE-U1- 29 712 356

## Beschreibung

Die Erfindung betrifft eine Kupplungseinrichtung für Roboter und Werkzeuge mit den Merkmalen im Oberbegriff des Hauptanspruchs.

Derartige Kupplungseinrichtungen, die auch als Werkzeugwechsler für Roboter bezeichnet werden, sind aus der Praxis in verschiedenen Ausführungsformen bekannt. Sie haben ein hohes Gewicht und sind für programmierbare Industrieroboter mit positionsgesteuerten Achsen sowie mit hoher Tragkraft ausgelegt und ausgebildet. Die Kupplungseinrichtung weist mehrere miteinander verbindbare Kupplungsteile mit einer mechanischen Kupplung und einer Medienkupplung auf. Die mechanische Kupplung hat formschlüssig ineinander greifende Kupplungselemente an den Kupplungsteilen und eine zwischen den Kupplungselementen wirkende Verriegelung. Die Verriegelung ist steuerbar und ist mit einem eigenen internen Antrieb ausgerüstet. Die Medienkupplung beinhaltet eine große Zahl von elektrischen und/oder fluidischen Kupplungsmitteln für die Werkzeugversorgung. Die zugehörigen Leitungen werden außen am Roboterarm entlanggeführt und an die Kupplungseinrichtung angeschlossen.

Derartige Kupplungseinrichtungen sind z.B. aus der WO 99/60667 A1 und der WO 99/19121 A1 bekannt.

Die EP 1 970 170 A1 zeigt eine mechanische Kupplungseinrichtung für einen Roboter und ein Werkzeug mit einer Verriegelung zwischen mechanischen Kupplungselementen, wobei die Verriegelung durch einen internen pneumatischen Zylinder betätigt wird.

Die EP 0 151 819 A1 offenbart eine ähnliche verriegelbare Kupplungseinrichtung für einen Roboter und ein Werkzeug. Die Verriegelung wird ebenfalls durch einen Zylinder betätigt, der extern an einem Werkzeugmagazin angeordnet ist.

Die DE 297 12 356 U1 befasst sich mit einer dauerhaften elektrischen, rotationsfähigen Steckverbindung mit Schleifringen und Schleifkontaktfedern für den Anschluss einer Kamera an einem Motor.

Es ist Aufgabe der vorliegenden Erfindung, eine verbesserte Kupplungstechnik aufzuzeigen.

Die Erfindung löst diese Aufgabe mit den Merkmalen im Hauptanspruch.
Die beanspruchte Kupplungstechnik erlaubt dem Roboter ein schnelles, sicheres und automatisches Wechseln von Werkzeugen. Die Kupplungseinrichtung hat den Vorteil, dass sie ein niedriges Gewicht hat, klein baut, eine geringe Störkontur besitzt und wenig Bauaufwand erfordert. Auf einen eigenen Verriegelungsantrieb kann verzichtet werden. Die Verriegelung kann durch eine Verlagerungsbewegung des Roboters mitsamt der Kupplungseinrichtung betätigt werden. Die Kupplungseinrichtung ist dadurch für Leichtbauroboter besonders geeignet. Außerdem kann die Peripherie, z.B. ein Werkzeugmagazin entsprechend einfach, platzsparend und kostengünstig ausgebildet sein.

Die Kupplungstechnik eignet sich insbesondere für programmierbare mehrachsige Roboter mit mindestens einer kraftgesteuerten oder kraftgeregelten Roboterachse und einer zugehörigen Sensorik zur Erfassung der einwirkenden Belastungen. Ein solcher Roboter kann vorteilhafterweise auch eine Nachgiebigkeitsregelung aufweisen. Dies ist günstig für den automatischen Werkzeugwechsel und für das vom Roboter ausgelöste und durch Eigenbewegung ausgeführte Betätigen der Verriegelung. Diese Robotergestaltung gestattet auch ein beschädigungsfreies Suchen und Tasten, was Vorteile bei Einsatz und Funktion des Werkzeugs und beim Werkzeugwechsel bringt.

Der Roboter kann außerdem eine interne Leitungsführung durch die Roboterglieder haben, die am Abtriebselement endet und dort mit einer Medienkupplung verbunden sein kann. Die beanspruchte Kupplungseinrichtung kann hierfür eine besonders günstige und vorteilhafte Ausbildung haben. Sie ermöglicht eine Medienumlenkung von einer roboterseitigen axialen Zuführung zu einer seitlichen Abführung. Die Kupplungseinrichtung kann dadurch besonders kompakt bauen.

Im Zusammenwirken mit kraftgesteuerten oder kraftgeregelten Roboterachsen ergeben sich dabei besondere Vorteile. Insbesondere können äußere Einflüsse und Störungen durch externe Leitungsführungen, mitbewegte und unkontrolliert schwingende externe Leitungsmassen und dgl. vermieden werden.

Besonders vorteilhaft ist die Ausbildung eines Roboter-Abtriebselements als Kupplungsteil. Dies hat eigenständige erfinderische Bedeutung und spart zusätzlich Gewicht sowie Bau- und Montageaufwand. Ein Roboter, insbesondere ein Roboter der vorbeschriebenen Art, kann dadurch standardisiert werden.

Die beanspruchte Kupplungseinrichtung baut besonders leicht und hat einen geringen Bau- und Kostenaufwand. Sie ist dadurch besonders wirtschaftlich. Für die Betätigung einer Verriegelung für die mechanische Kupplung kann auf einen kupplungseigenen Antrieb und die Zuführung von Fremdenergie verzichtet werden. Dies spart Gewicht und Bauraum. Die Betätigung der Verriegelungsbewegung kann über eine Verlagerungsbewegung des Roboters, insbesondere seines letzten Gliedes, erfolgen, wobei z.B. die Kupplungseinrichtung im Raum linear bewegt oder geschwenkt wird. Hierbei kann die Kupplungseinrichtung insbesondere eine Relativbewegung gegenüber einem Anschlag oder einem externen Betätiger ausführen, wobei hierdurch die Verriegelung betätigt bzw. ausgelöst wird. Vorteilhafterweise kann dies an einem Werkzeughalter geschehen, wobei das werkzeugseitige Kupplungsteil zunächst formschlüssig aufgenommen und gehalten wird, wobei anschließend die Verriegelung betätigt, insbesondere gelöst wird und der Roboter abkuppeln kann. Die Verlagerungsbewegung ist bevorzugt quer zur Kupplungsachse ausgerichtet.

Ferner ist es günstig, die Medienkupplung an den formschlüssig ineinander greifenden Kupplungselementen, insbesondere an einem Kupplungszapfen und an einer Aufnahmeöffnung, anzuordnen. Dies spart Gewicht und Bauraum und schützt die beim Zusammenfahren der Kupplungsteile automatisch miteinander in Verbindung tretenden Kupplungsmittel. Die Kupplungsmittel und die Medienkupplung können auf eine interne Leitungsführung des Roboters adaptiert sein, was ebenfalls für Bauraum und Gewicht günstig ist.

Für die konstruktive Ausbildung der Kupplungsteile, der formschlüssig ineinander greifenden Kupplungselemente und der Kupplungsmittel der Medienkupplung gibt es verschiedene vorteilhafte Ausgestaltungsmöglichkeiten, die in den Unteransprüchen angegeben sind.

Die beschriebenen Ausführungsformen der Verriegelung mit dem Riegelelementen und den Varianten eines internen und/oder externen Betätigers sind besonders einfach, leichtgewichtig und betriebssicher. Sie eignen sich besonders für die bevorzugte Verriegelungsbetätigung durch eine Roboterbewegung und den Einsatz des Roboters als Aktor.

Die Medienkupplung ist besonders betriebssicher und erlaubt die Unterbringung einer großen Zahl von elektrischen und/oder fluidischen oder sonstigen Kupplungsmitteln auf engstem Raum, wobei auch eine räumliche und funktionale Trennung erreichbar ist. Hierbei sind besonders günstige Kupplungs-Kinematiken möglich. Für Fluide ergibt sich ein axialer Steckkontakt und für elektrische Ströme ein in Axial- und Kupplungsrichtung schleifender Kontakt mit federnder Anpressung in Querrichtung.

Die Erfindung ist in den Zeichnungen beispielhaft und schematisch dargestellt. Im Einzelnen zeigen:
- Figur 1:: einen mehrachsigen programmierbaren Roboter mit einer Kupplungseinrichtung und einem Werkzeug,
- Figur 2:: eine Bereitstellung mit Werkzeughaltern und mehreren Werkzeugen in Stirnansicht,
- Figur 3 und 4:: eine Draufsicht und eine geklappte Seitenansicht zu Figur 2,
- Figur 5:: einen vergrößerten Querschnitt durch eine Kupplungseinrichtung gemäß Schnittlinie V-V von Figur 3,
- Figur 6:: eine Variante der geschlossenen Kupplungseinrichtung in perspektivischer Ansicht,
- Figur 7:: eine Explosionsdarstellung einer geöffneten Kupplungseinrichtung und ihrer Teile gemäß Figur 6,
- Figur 8 und 9:: eine weitere Variante einer teilweise geöffneten Kupplungseinrichtung,
- Figur 10 und 11:: durchsichtige Drahtmodelle einer weiteren Variante einer Kupplungseinrichtung in verschiedenen perspektivischen Ansichten,
- Figur 12:: eine weitere perspektivische Ansicht einer geöffneten Variante einer Kupplungseinrichtung und
- Figur 13 bis 17:: eine weitere Variante einer Kupplungseinrichtung in verschiedenen Ansichten.

Die Erfindung betrifft eine Kupplungseinrichtung (1) für einen Roboter (3) und ein Werkzeug (2). Die Erfindung betrifft ferner ein Kupplungsverfahren sowie eine Arbeitsvorrichtung (52). Sie betrifft außerdem einen Roboter (3) mit einer Kupplungseinrichtung (1) und ein Werkzeugwechselsystem (53).

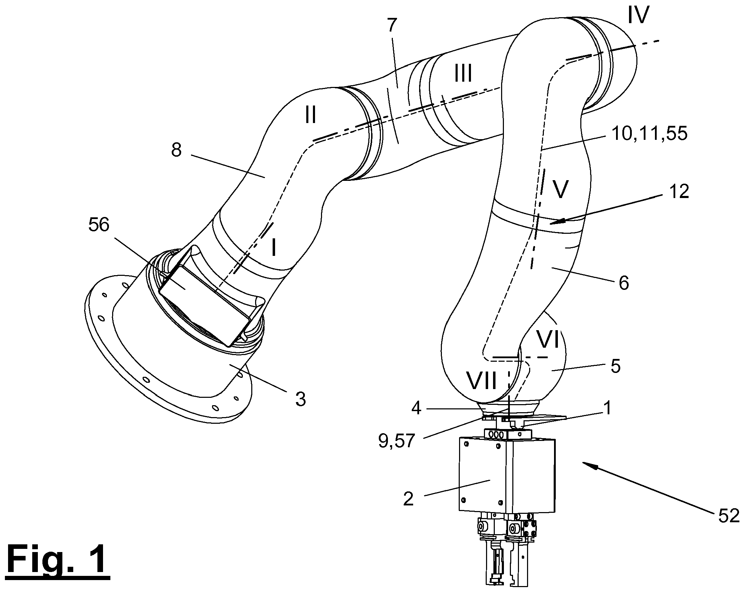

Figur 1 zeigt in einer perspektivischen Darstellung einen mehrachsigen und mehrgliedrigen Roboter (3), der an seinem Endglied (5) eine Kupplungseinrichtung (1) mit einem Werkzeug (2) trägt. Die Kupplungseinrichtung (1) wird auch als Wechselkupplung bezeichnet und dient dazu, ein Werkzeug (2) automatisch an- und abkuppeln sowie wechseln zu können. Ein Roboter (3) mit einem Werkzeug (2) und einer Kupplungseinrichtung (1) bildet eine Arbeitsvorrichtung (52). Die Arbeitsvorrichtung (52) kann weitere Bestandteile aufweisen.

Figur 1 zeigt eine bevorzugte Ausführungsform eines Roboters (3) in Form eines Leichtbauroboters mit kraftgesteuerten oder kraftgeregelten Roboterachsen (I - VII), die nachfolgend näher erläutert wird.

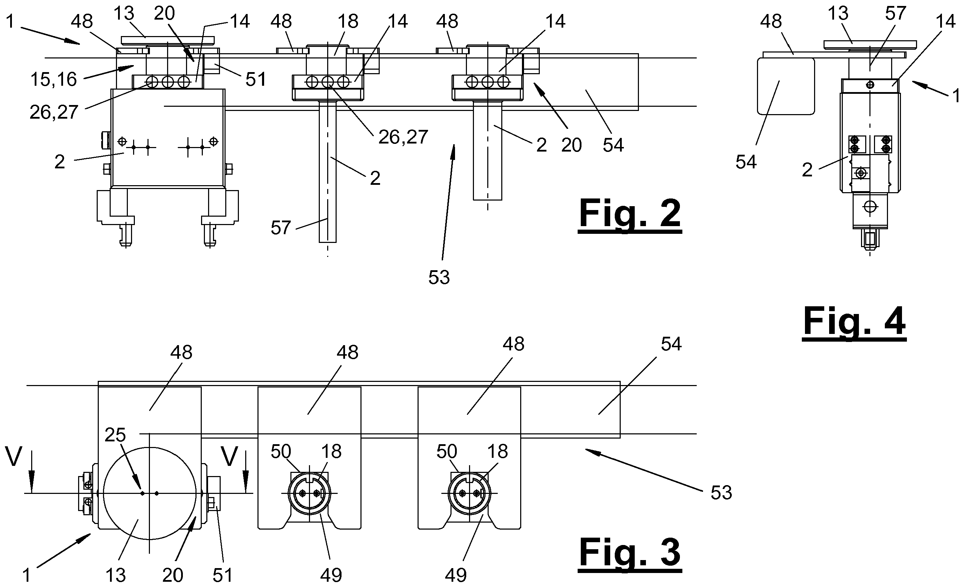

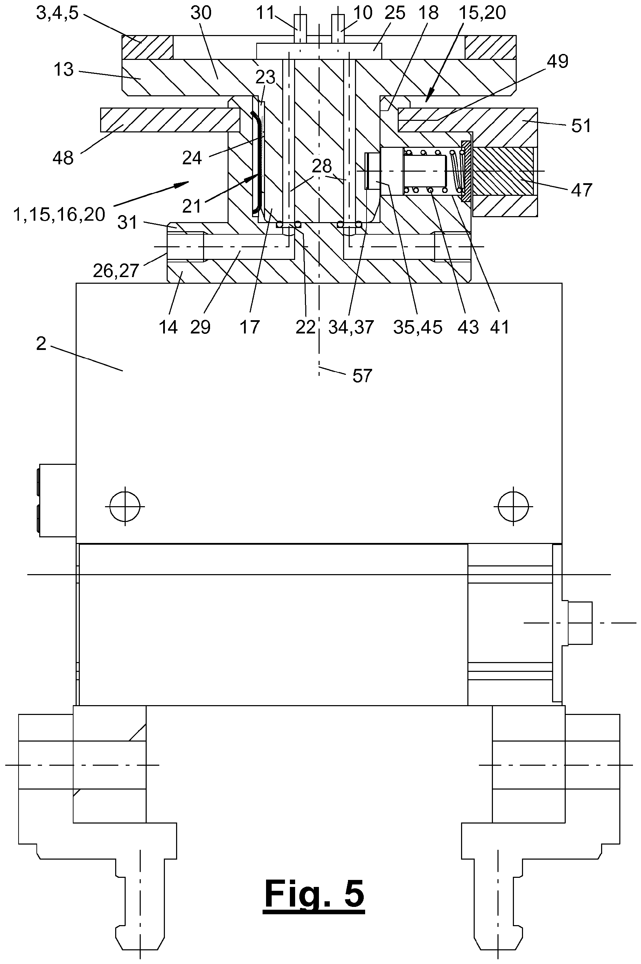

Das Werkzeug (2) kann in beliebiger Weise ausgebildet und in beliebiger Zahl vorhanden sein. In Figur 1 und 5 ist das Werkzeug (2) z.B. als Greifer mit zwei relativ zueinander beweglichen und gesteuert angetriebenen parallelen Greiffingern ausgebildet. Figur 2 und 3 zeigen andere Ausführungen von Werkzeugen (2). Ein Werkzeug kann auch beliebige Funktionen haben. Die Arbeitsvorrichtung (52) kann entsprechend unterschiedliche Prozesse durchführen, z.B. Handhaben, Bearbeiten oder Fügen von Werkstücken (nicht dargestellt).

Ein Werkzeug (2) kann starr oder beweglich ausgebildet sein, wobei letzteres ein oder mehrere bewegliche Teile und einen oder mehrere Antriebe oder Aktoren für deren Bewegung aufweisen kann. Das Werkzeug (2) kann vom Roboter (3) über die Kupplungseinrichtung (1) bewegt, mit Betriebsmitteln versorgt und ggf. gesteuert werden, insbesondere mittels einer Robotersteuerung (nicht dargestellt). Von der Kupplungseinrichtung (1) können dabei mittels einer Medienkupplung (16) Signal- und Steuerspannungen, elektrische Leistungsströme, fluidische Betriebsmittel, wie Druckluft, Kühlmittel oder dgl. übertragen werden. Hierfür kann der Roboter (3) die in Figur 1 gezeigte interne Leitungsführung (55) durch seine Glieder (5,6,7,8) aufweisen.

Für die ein oder mehreren Werkzeuge (2) kann jeweils ein Werkzeughalter (48) vorgesehen sein. Dieser kann an einer Bereitstellung (54), z.B. Gestell oder dgl. eines mehrständigen Werkzeugmagazins, angeordnet sein. Die Arbeitsvorrichtung (52) kann ein Werkzeugwechselsystem (53) aufweisen, mit dem verschiedene Werkzeuge (2) bereitgehalten werden und sich in einer kupplungsgünstigen und definierten Position befinden.

Die Kupplungseinrichtung (1) weist mehrere, z.B. zwei miteinander verbindbare Kupplungsteile (13,14) mit einer mechanischen Kupplung (15) und einer Medienkupplung (16) auf. Die mechanische Kupplung (15) verbindet mittels ineinander greifender Kupplungselemente (17,18) formschlüssig die Kupplungsteile (13,14). Die mechanische Kupplung (15) und die Medienkupplung (16) werden mit der Verriegelung (20) in Schließstellung gehalten. Die Verriegelung (20) wirkt zwischen den formschlüssig ineinander greifenden Kupplungselementen (17,18).

Die Verriegelung (20) kann durch eine Eigenbewegung und eine Verlagerungsbewegung des Roboters (3) und der Kupplungseinrichtung (1) betätigt werden. Sie kann hierbei insbesondere geöffnet oder gelöst werden. Durch die Verlagerungsbewegung, z.B. eine Linear- oder Schwenkbewegung des Endglieds (5), wird die Kupplungseinrichtung (1) mitgenommen und bewegt, wobei durch diese vom Roboter (3) ausgelöste Bewegung die zum Betätigen der Verriegelung (20) erforderliche Energie aufgebracht wird. Die Verlagerungsbewegung des Roboters (3) ist bevorzugt quer zur Kupplungsachse (55) der Kupplungseinrichtung (1) ausgerichtet. Bei einigen Ausführungsformen kann die Verriegelung (20) bedarfsweise auch von einem Bediener manuell betätigt werden.

Figur 5 bis 12 zeigen verschiedene konstruktive Ausgestaltungen der Kupplungseinrichtung (1) und ihrer Kupplungsteile (13,14). In allen Ausführungsbeispielen weisen die Kupplungsteile (13,14) die besagten Kupplungselemente (17,18) auf, die beim Ankuppeln formschlüssig ineinander greifen. Ein vorstehendes Kupplungselement (17) ist z.B. als Zapfen ausgebildet und befindet sich an dem roboterseitigen Kupplungsteil (13). Der Zapfen kann eine angeschrägte oder konische Spitze aufweisen. Ein aufnehmendes Kupplungsteil (18) ist z.B. als passende, insbesondere komplementäre Aufnahmeöffnung für den Zapfen (17) ausgebildet und befindet sich am werkzeugseitigen Kupplungsteil (14). Vorzugsweise sind die Kupplungselemente (17,18) zentral an den Kupplungsteilen (13,14) angeordnet. Die Kupplungselemente (17,18) haben bevorzugt eine zylindrische Form. Varianten dieser beispielhaften Ausgestaltung sind in verschiedener Weise möglich. Die Zuordnung der Kupplungselemente (17,18) zu den Kupplungsteilen (13,14) kann vertauscht sein. Die Zahl der Kupplungselemente (17,18) kann größer sein. Auch ihre Formgebung kann variieren.

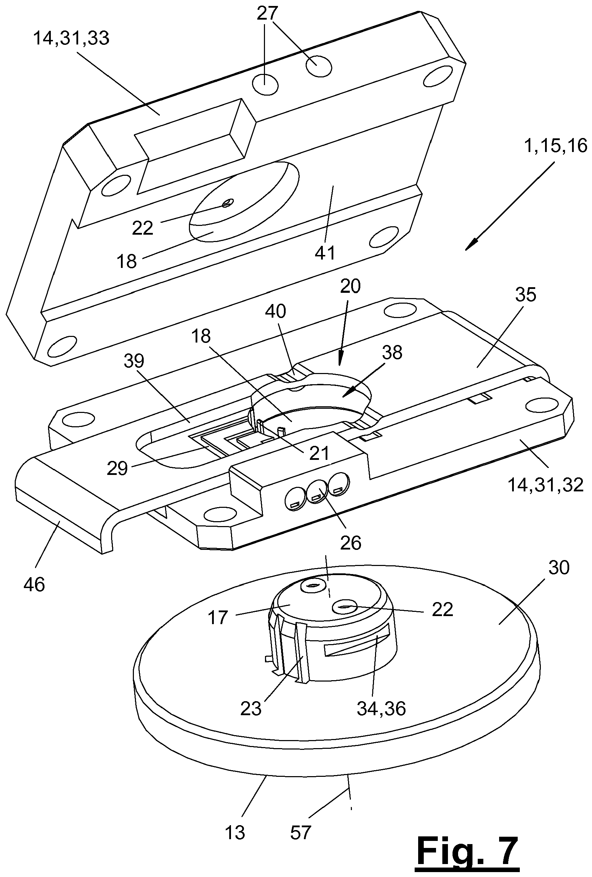

Die Kupplungsteile (13,14) weisen ferner einen Kupplungsflansch oder eine Kupplungsplatte (30,31) auf, die jeweils zur Verbindung mit dem Roboter (3) oder mit dem Werkzeug (2) dient. Ein Kupplungsflansch (31), z.B. an dem werkzeugseitigen Kupplungsteil (14), kann mehrteilig ausgebildet sein. Figur 7 zeigt dies beispielhaft in einer Explosionsdarstellung von zwei Flanschteilen (32,33).

In Schließstellung der Kupplungseinrichtung (1) können die z.B. ebenen Kupplungsflansche oder Kupplungsplatten (30,31) mit stützendem Kontakt aneinander liegen. Der roboterseitige Kupplungsflansch (30) ist in den verschiedenen Varianten jeweils als kreisrunde Platte ausgebildet. Der werkzeugseitige Kupplungsflansch (31) ist quaderförmig. Alternativ sind andere Formgebungen möglich.

Die Verriegelung (20) weist formschlüssig ineinander greifende und relativ zueinander bewegliche Riegelelemente (34,35) auf, die an den Kupplungsteilen (13,14) angeordnet sind. Die Riegelelemente (34,35) wirken zwischen den im formschlüssigen Eingriff stehenden Kupplungselementen (17,18), wobei ein aufnehmendes Riegelelement (34), insbesondere eine Riegelöffnung, bevorzugt an einem vorstehenden Kupplungselement (17), insbesondere einem Zapfen, angeordnet ist. In den nachfolgend beschriebenen Ausführungsbeispielen sind unterschiedliche Varianten der Riegelelemente (34,35) angegeben.

Die Verriegelung (20) kann ferner einen Betätiger (46,47) aufweisen, der zum Öffnen und/oder Schließen der Verriegelung (20) dienen kann. Der Betätiger (46,47) kann unterschiedlich ausgebildet und angeordnet sein.

Ein interner Betätiger (46) kann in oder an einem Kupplungsteil (13,14) angeordnet sein. Die Verriegelung (20) kann alternativ oder zusätzlich einen externen Betätiger (47) aufweisen, der z.B. an einem Werkzeughalter (48) angeordnet ist. Die Verriegelung (20) bzw. der Betätiger (46,47) kann in der vorerwähnten Weise durch eine Relativbewegung der Kupplungseinrichtung (1) gegenüber einem Werkzeughalter (48) aktiviert werden.

Der Werkzeughalter (48) weist eine seitlich offene und z.B. schlitzartige Aufnahmeöffnung (49) zum Einführen und formschlüssigen Aufnehmen des einen werkzeugseitigen Kupplungsteils (14) und des daran angeordneten Werkzeugs (2) auf. Am geschlossenen Ende der Aufnahmeöffnung (49) oder an anderer geeigneter Stelle kann ein Anschlag (50) für den internen Betätiger (46) vorhanden sein. An einem Werkzeughalter (48) kann im Bereich der Aufnahmeöffnung (49) alternativ oder zusätzlich ein Magnethalter (51) mit einem externen Betätiger (47) angeordnet sein, der z.B. als Magnet ausgebildet ist. Dies kann ein Permanentmagnet oder ein schalt- oder steuerbarer Elektromagnet sein.

Die vorerwähnte Medienkupplung (16) ist zumindest teilweise an den formschlüssig ineinander greifenden Kupplungselementen (17,18) angeordnet und wird bei deren Zusammenfahren automatisch geschlossen sowie beim Auseinanderfahren geöffnet. Die Medienkupplung (16) weist elektrische und/oder fluidische Kupplungsmittel (21,22) auf, die zumindest teilweise an den formschlüssig ineinander greifenden Kupplungselementen (17,18) angeordnet und entlang von deren Längsachse oder Kupplungsachse (57) ausgerichtet sind.

An den Kupplungsteilen (13,14) sind ferner externe roboter- und werkzeugseitige Leitungsanschlüsse (25,26,27) und interne Leitungsdurchführungen (28,29) zu den Kupplungsmitteln (21,22) angeordnet. In der Kupplungseinrichtung (1) kann eine Medienumlenkung von einer axialen Zuführung über einen roboterseitigen Leitungsanschluss (25) zu einer peripheren bzw. seitlichen Abführung an einem werkzeugseitigen Leitungsanschluss (26,27) erfolgen.

Figur 3 und 5 zeigen in Draufsicht und teilweise geschnittener Seitenansicht eine erste Variante der Kupplungseinrichtung (1).

Der roboterseitige, ggf. kombinierte elektrische und fluidische, insbesondere pneumatische Leitungsanschluss (25) ist zentral am Kupplungsteil (13) angeordnet. Hier sind z.B. eine oder mehrere elektrische Leitungen (10) und eine oder mehrere fluidische, insbesondere pneumatische Leitung (11) der internen Leitungsführung (55) angeschlossen. Vom Leitungsanschluss (25) gehen z.B. drei elektrische und zwei fluidische Leitungsdurchführungen (28) aus, die sich entlang der Zentralachse (57) der Kupplungseinrichtung (1) und des zapfenförmigen Kupplungselements (17) erstrecken.

Ein elektrisches Kupplungsmittel (21) kann z.B. als Schleifkontakt ausgebildet sein und kann sich am Mantel der Kupplungselemente (17,18) befinden. Der Schleifkontakt (21) ist längs der Kupplungsachse ausgerichtet und besteht aus elektrischen Kontaktstreifen am Mantel des Zapfens (17) und der Aufnahmeöffnung (18), die beim Ankuppeln in elektrisch leitenden Berührungskontakt gebracht werden. Ein Federelement (24) kann den stromleitenden Kontakt sichern. Der Schleifkontakt (21) kann mehrfach und mit umfangseitiger Verteilung an den Kupplungselementen (17,18) vorhanden sein.

Die mechanische Kupplung (15) kann eine Drehsicherung (19) gegen Verdrehen um die Kupplungsachse (57) aufweisen. Diese kann z.B. aus einer oder mehreren axialen Nuten (23) am vorstehenden Kupplungselement (17) und entsprechenden Vorsprüngen oder axialen Rippen am aufnehmenden Kupplungselement (18) bestehen, die beim Ankuppeln formschlüssig ineinander greifen. Die Nuten- und Rippenzuordnung kann auch vertauscht sein.

Die Drehsicherung (19) kann ggf. mit dem Schleifkontakt (21) zusammenwirken. Ein am werkzeugseitigen Kupplungsteil (14) angeordneter Kontaktstreifen kann z.B. eine in Figur 5 gezeigte vorgewölbte Formgebung mit Federeigenschaften haben und kann in Kupplungsstellung formschlüssig in die Nut (23) greifen. Dieser Kontaktstreifen kann an einer Rippe der Drehsicherung (19) angeordnet sein oder diese ersetzen. Er kann an einem am Nutengrund befindlichen Kontaktstreifen anliegen.

Ein fluidisches Kupplungsmittel (22) kann z.B. als steckbare Rohrkupplung(en) ausgebildet sein und kann sich in den gezeigten Ausführungsbeispielen an der Stirnseite des Zapfens (17) sowie am Boden der sacklochartigen Aufnahmeöffnung (18) befinden. Die Stirnseite und der Boden können eben ausgebildet und quer zur Kupplungsachse (57) ausgerichtet sein. Die fluidische Leitungsdurchführung (28) ist im Inneren des Zapfens (17) angeordnet und axial ausgerichtet. Die Rohrkupplungen sind mit Dichtungen versehen und werden beim Ankuppeln automatisch zusammengesteckt. Die Rohrkupplungen können Verschlüsse (nicht dargestellt) aufweisen, die beim Ankuppeln automatisch geöffnet und beim Abkuppeln automatisch geschlossen werden.

Im Ausführungsbeispiel von Figur 2 bis 5 ist am werkzeugseitigen Kupplungsteil (14) und z.B. an dessen Kupplungsflansch (31), bevorzugt randseitig, ein elektrischer und/oder fluidischer Leitungsanschluss (26,27) vorhanden. Mehrere Leitungsanschlüsse (26,27) können funktional und örtlich getrennt ausgebildet und angeordnet sein. Sie sind über die werkzeugseitigen Leitungsdurchführungen (29) mit den besagten Kupplungsmitteln (21,22) verbunden. Die Leitungsdurchführungen (29) können für die Medienumlenkung einen um 90° abgewinkelten Verlauf haben. An dem oder den Leitungsanschlüssen (26,27) können weiterführende Leitungen zum Werkzeug (2) lösbar angeschlossen werden.

Aus Figur 5 ist außerdem ersichtlich, dass das werkzeugseitige Kupplungsteil (14) an geeigneter Stelle eine Nut oder dgl. für einen formschlüssigen Eingriff mit dem Werkzeughalter (48) aufweisen kann. Eine solche Nut ist z.B. an einem Außenmantel eines rohrförmigen und die Aufnahmeöffnung (18) umgebenden Ansatzes am Kupplungsflansch (31) angeordnet und korrespondiert mit der Aufnahmeöffnung (49) bzw. den Halterarmen. Das Werkzeug (2) und das werkzeugseitige Kupplungsteil (14) können hierüber hängend gehalten werden, wobei die Aufnahmeöffnung (18) nach oben offen ist und ein Einstecken des Zapfens (17) ermöglicht. In Figur 2 und 3 sind ein angekuppelter Greifer (2) und zwei weitere abgekuppelte andere Werkzeuge (2) dargestellt.

Figur 5 verdeutlicht außerdem eine Ausführungsform der Verriegelung (20) mit einem externen Betätiger (47). Das aufnehmende Riegelelement (34) bzw. die Riegelöffnung ist in diesem Ausführungsbeispiel als Querbohrung (37) im Zapfen (17) ausgebildet. Das bewegliche Riegelelement (35) ist hier als ebenfalls quer oder schräg zur Kupplungsachse (57) ausgerichteter Bolzen (45) ausgebildet und wird von einer endseitig aufsteckten Feder (43) in die Riegelstellung in Eingriff mit der Querbohrung (37) gedrückt. Der Bolzen (45) ist am werkzeugseitigen Kupplungsteil (14) geführt und gelagert. Die Führung (41) wird von einer quer oder schräg liegenden Bohrung im Kupplungsteil (14) gebildet, die auch das Federelement (43) aufnimmt und die außenseitig mit einer Abdeckung verschlossen ist, an der sich die Feder (43) abstützt.

Der externe Betätiger (47) am Halter (48) weist ein Kraftelement mit eigener Kraftentfaltung auf, welches das Riegelelement (35) bzw. den Bolzen (45) gegen die Kraft des Federelements (43) vorzugsweise berührungsfrei anzieht und dadurch die Verriegelung (20) löst und öffnet. Das Kraftelement kann hierfür in beliebig geeigneter Weise ausgebildet sein. Vorzugsweise handelt es sich um den vorerwähnten Magneten. Der externe Betätiger (47) ist am Halter (48) bzw. am Magnethalter (21) im Bereich der Endposition des aufgenommenen Werkzeugs (2) angeordnet und befindet sich dann in der Nähe des Riegelelements (35), z.B. im rückwärtigen Projektionsbereich des Bolzens (45).

Der externe Betätiger (47) wird aktiv bzw. entfaltet seine Wirkung, wenn das werkzeugseitige Kupplungsteil (14) vom Roboter (3) in die Aufnahmeöffnung (49) eingeführt und der Bolzen (45) dem Betätiger (47) angenähert wird. Am Ende des Einführwegs bzw. in der Endposition des Kupplungsteils (14) zieht der Betätiger (47) den Bolzen (45) zurück und öffnet die Verriegelung (20), sodass der Roboter (3) abkuppeln und das Kupplungsteil (13) abziehen kann. Der Betätiger (47) sichert auch durch Magnetkraft die Werkzeuglage am Halter (48).

Die Verriegelung (20) bleibt solange gelöst, bis der Roboter (3) wieder ankuppelt und den Formschluss der mechanischen Kupplung (15) herstellt. Anschließend bewegt der Roboter (3) die zwar formschlüssig verbundenen, aber noch nicht verriegelten Kupplungsteile (13,14) entlang des Halters (48) und der Aufnahmeöffnung (49), bis die Wirkung des externen Betätigers (47) nachlässt und das Federelement (43) den Bolzen (45) in die Querbohrung (37) schiebt sowie die Verriegelung (20) schließt.

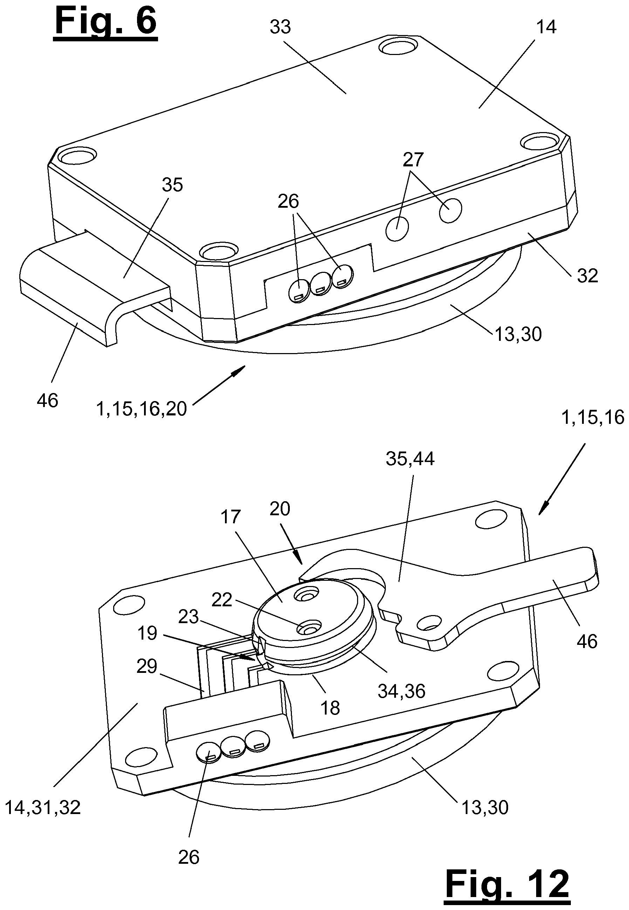

Figur 6 und 7 zeigen eine Variante der Kupplungseinrichtung (1), wobei Figur 6 die Zusammenbaustellung und Figur 7 eine Explosionsdarstellung zeigt. Das bewegliche Riegelelement (35) ist in dieser Ausführungsform als bewegliche Riegelplatte, insbesondere als Schieber, ausgebildet, der in dem werkzeugseitigen Kupplungsteil (14) angeordnet ist und aus diesem einseitig oder beidseitig herausragt. Der werkzeugseitige Kupplungsflansch (31) ist hier mehrteilig ausgebildet, wobei der Schieber (35) zwischen den Flanschteilen (32,33) angeordnet und mittels einer Führung (41) gehalten und z.B. linear geführt ist.

Wie Figur 7 verdeutlicht, weist der Schieber (35) einen Ausschnitt (38) auf, der eine variierende Weite besitzt und z.B. eine schlüssellochartige Form hat. Der erweiterte Ausschnittsbereich hat eine der Aufnahmeöffnung (18) entsprechende Form und kann mit dieser in geöffneter Verriegelungsstellung fluchten. Die Aufnahmeöffnung (18) ist zweigeteilt, wobei die Flanschteile (32,33) entsprechende Öffnungsabschnitte aufweisen. Der schmalere Bereich des Ausschnitts (38) und insbesondere der dortige umgebende Rand (39) des Riegelelements (35) dient zum Schließen der Verriegelung (20). Die aufnehmende Riegelöffnung (34) befindet sich am Zapfen (17). Sie wird z.B. durch zwei tangentiale und quer zur Achse (57) gerichtete Nuten (36) am Zapfenmantel gebildet, in welche die Ränder (39) formschlüssig bei einer Verschiebung des Riegelelements (35) eingreifen können. Alternativ können nur eine Nut (36) und ein Rand (39) für die Verriegelung vorhanden sein.

Die Verriegelung (20) hat in diesem Ausführungsbeispiel einen internen Betätiger (46). Dieser wird von dem nach außen ragenden Überstand oder Vorsprung des Riegelelements (35) gebildet. Figur 6 und 7 zeigen hierbei die Öffnungsstellung, in der der größere Bereich des Ausschnitts (38) fluchtend zur Aufnahmeöffnung (18) angeordnet ist bzw. einen Teil dieser Aufnahmeöffnung bildet. Der interne Betätiger (46) kann mit einem Anschlag (50) in formschlüssige Verbindung gebracht werden, der an geeigneter Stelle, z.B. an einem Werkzeughalter (48), angeordnet ist, welcher das Kupplungsteil (14) mit dem Werkzeug (2) während des An- und Abkuppelns hält und führt. Der Betätiger (46) kann z.B. eine abgewinkelte Form haben, wobei die Riegelplatte (35) hierfür am freien Ende entsprechend abgekantet ist. Diese Abkantung kann in formschlüssigen Eingriff mit einem z.B. nutenförmigen Anschlag (50) gebracht werden, der das Riegelelement (35) quer zu seiner Längserstreckung beidseits festhält. Der vorstehende Betätiger (46) erlaubt auch eine manuelle Bedienung.

Zum Abkuppeln bringt der Roboter (3) die Kupplungseinrichtung (1) mit diesem Betätiger (46) in die besagte Anschlagstellung, wodurch das Riegelelement (35) arretiert wird. Mit einer anschließenden und vom Roboter (3) ausgeführten Verlagerungsbewegung werden dann die Kupplungsteile (13,14) gemeinsam entlang des arretierten Riegelelements (35) und des länglichen Ausschnitts (38) bewegt, bis die Ränder (39) außer Eingriff mit den tangentialen Nuten (36) treten und die Verriegelung (20) gelöst wird. Der Roboter (3) kann dann abkuppeln und das Kupplungsteil (13) abziehen.

Zum Ankuppeln wird das Kupplungsteil (13) wieder eingesteckt, die mechanische Kupplung (15) geschlossen und dann eine gemeinsame Verlagerung der Kupplungsteile (13,14) in Gegenrichtung ausgeführt, wobei über Eingriff der Ränder (39) an den Nuten (36) die Verriegelung (20) wieder geschlossen wird. Zur Sicherung der Öffnungs- und Schließstellung der Verriegelung (20) können geeignete Sicherungsmittel (40), z.B. federnde Rasten oder dgl. vorhanden sein.

In einer Variante kann der Anschlag (50) als Führungs- und Anlaufschiene an einem Werkzeughalter (48) ausgebildet und seitlich an dessen schlitzartiger Aufnahmeöffnung (49) angeordnet sein. Beim Einführen des Werkzeugs (2) oder Kupplungsteils (14) in die Aufnahmeöffnung (49) gleitet der Betätiger (46) an der Führungs- und Anlaufschiene entlang und wird hierbei unter Öffnung der Verriegelung (20) verschoben und nach dem Abkuppeln in dieser Öffnungsstellung gehalten.

Figur 7 verdeutlicht außerdem die vorbeschriebene Ausführung der Medienkupplung (16) mit den Kupplungsmitteln (21,22), den Leitungsdurchführungen (28,29) sowie den werkzeugseitigen Leitungsanschlüssen (26,27) und auch den Nuten (23). Die Leitungsdurchführungen (29) und die Leitungsanschlüsse (26,27) können unterschiedlich verteilt an den Flanschteilen (32,33) angeordnet sein.

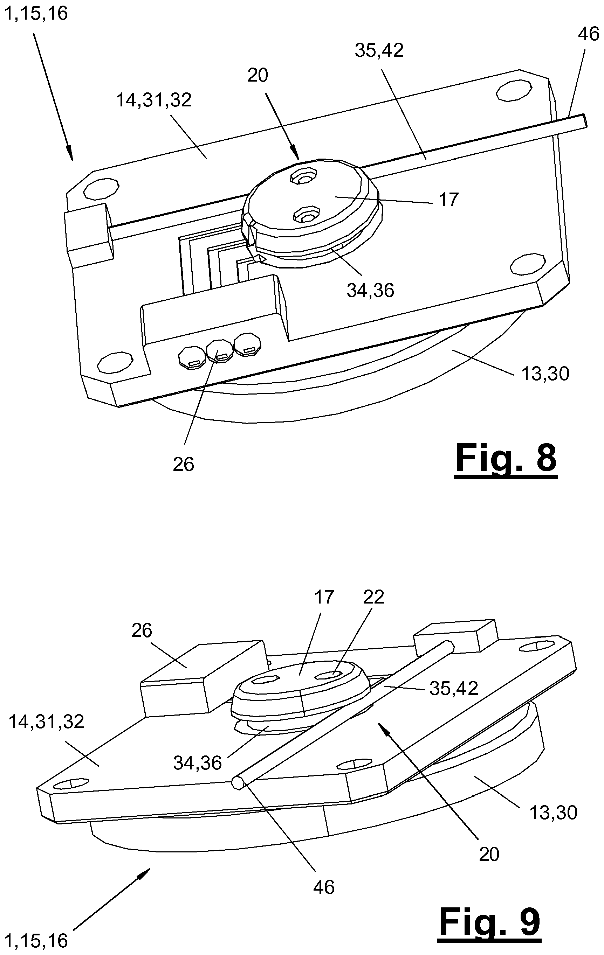

Figur 8 und 9 zeigen eine weitere Variante der Verriegelung (20). Das bewegliche Riegelelement (35) ist hier als Riegelstift und insbesondere als Federarm (42) ausgebildet. Der Federarm (42) kann an dem einen Flanschteil (32) des hier wiederum mehrteilig ausgebildeten Kupplungsflansches (31) angeordnet sein und wirkt mit einer Riegelöffnung (34) am Zapfen (17) des roboterseitigen Kupplungsteils (13) zusammen. Die Riegelöffnung (34) kann von einer tangentialen oder ringartig umlaufenden Nut (36) am Zapfenmantel gebildet sein. Der Federarm (42) hat hier eine z.B. gerade stangenartige Form und ist am einen Ende an seinem Kupplungsteil (14) fixiert. Am anderen Ende ragt er aus dem Kupplungsteil (14) heraus und bildet mit seinem Vorsprung oder Überstand einen internen Betätiger (46), der mit einem entsprechend gestalteten Anschlag (50) zusammenwirken kann. Der Federarm (42) ist derart ausgebildet und angeordnet, dass er durch seine eigene Federkraft bei eingestecktem Zapfen (17) mit der Riegelöffnung (34) in Eingriff tritt. Der Eingriff wird durch die Federwirkung des Riegelelements (35) gesichert und die Verriegelung (20) geschlossen.

Zum Öffnen der Verriegelung (20) wird der Betätiger (46) in formschlüssigen Eingriff mit einem geeigneten Anschlag (50) gebracht. Bei einer anschließenden und quer oder schräg zur Erstreckung des Federarms (42) gerichteten Verlagerungsbewegung des Roboters (3) und der Kupplungsteile (13,14) wird der am Anschlag gehaltene Federarm (42) gebogen und außer Eingriff mit der Riegelöffnung (34) gebracht. Der Roboter (3) kann dann das Kupplungsteil (13) abziehen. Der Federarm (42) kann bei entsprechender Ausbildung eines Werkzeughalters (48) in der Biegestellung verharren. Nach Öffnen der mechanischen Kupplung (15) kann ggf. das werkzeugseitige Kupplungsteil (14) sich etwas zur Seite bewegen, wobei der Federarm (42) in seine gestreckte Ausgangsstellung zurückkehrt.

Zum Ankuppeln kann der Roboter (3) sein Kupplungsteil (13) mit dem Zapfen (17) in die Aufnahmeöffnung (18) einführen, wobei der konische oder angeschrägte Zapfen (17) den in die Aufnahmeöffnung (18) ragenden Federarm (42) verdrängt und danach in die Riegelöffnung (34) einschnappen lässt. Alternativ kann der Zapfen (17) teilweise in die Aufnahmeöffnung (18) eintauchen, wodurch Formschluss zwischen den Kupplungsteilen (13,14) hergestellt wird und diese dann zum Öffnen der Verriegelung (20) verlagert werden können.

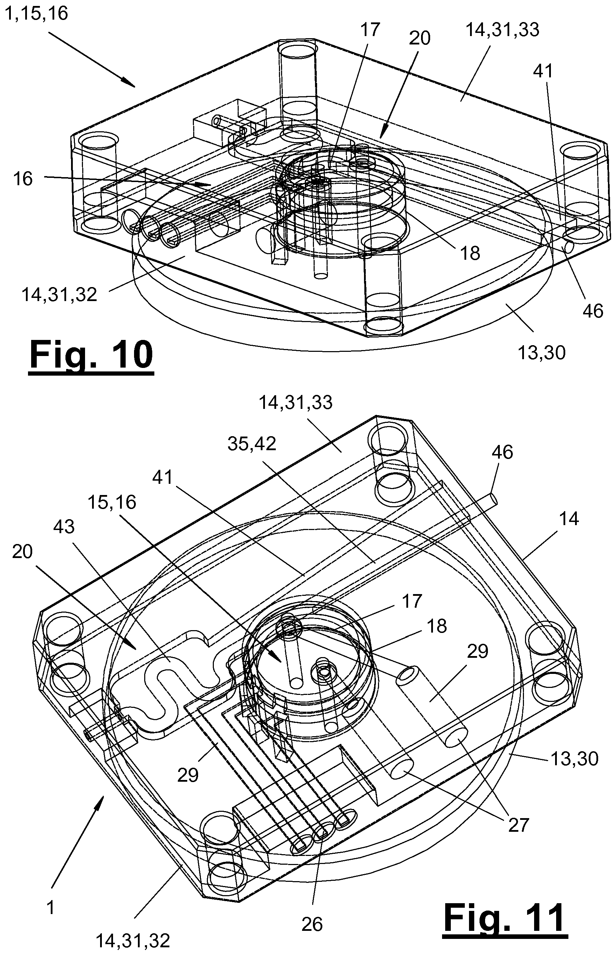

Figur 10 und 11 zeigen eine weitere Abwandlung der Verriegelung (20), wobei in diesem Ausführungsbeispiel das bewegliche Riegelelement (35) wieder als Riegelstift, insbesondere als Federarm (42), ausgebildet ist. Die rückstellende Federkraft zum Schließen und Sichern der Verriegelung (20) wird in diesem Fall durch ein spezielles Federelement (43) hergestellt, welches als mäanderförmige Verformung am rückwärtigen Ende des Federarms (42) ausgebildet ist. Figur 10 und 11 zeigen hierzu auch die Ausbildung der Führung (41) in der mehrteiligen Kupplungsplatte (31). Sie verdeutlichen die Kupplungseinrichtung (1) in der Darstellung eines durchsichtigen Drahtmodells, bei dem die innenliegenden Teile, insbesondere auch die Leitungsdurchführungen (28,29) und die anderen Bestandteile der Medienkupplung (16) sowie der mechanischen Kupplung (15) sichtbar sind.

Im Ausführungsbeispiel von Figur 12 weist die Verriegelung (20) ein anderes bewegliches Riegelelement (35) auf. Es ist als Schwenkarm (44) ausgebildet, der drehbar am einen Kupplungsteil (14) gelagert ist und mit einem hakenartigen oder gebogenen vorderen Ende mit einem aufnehmenden Riegelelement (34), z.B. einer ringartigen oder tangentialen Nut (36), einer Querbohrung oder dgl. am anderen Kupplungsteil (13) in formschlüssigen Eingriff tritt. Der Betätiger (46) kann hier ähnlich wie in der Variante des auslenkbaren Federarms (42) als rückwärtiger Überstand oder Vorsprung ausgebildet sein und durch Roboterbewegung in Eingriff mit einem geeigneten Anschlag gebracht werden, über dessen Widerstand ein Drehen und Auslenken des Schwenkarms (44) erzielt werden kann. Die der Schließ- und Öffnungsstellung entsprechenden Endpositionen des Schwenkarms (44) können durch geeignete Sicherungsmittel definiert und arretiert werden. Außerdem kann ein Federelement auf den Schwenkarm (44) einwirken.

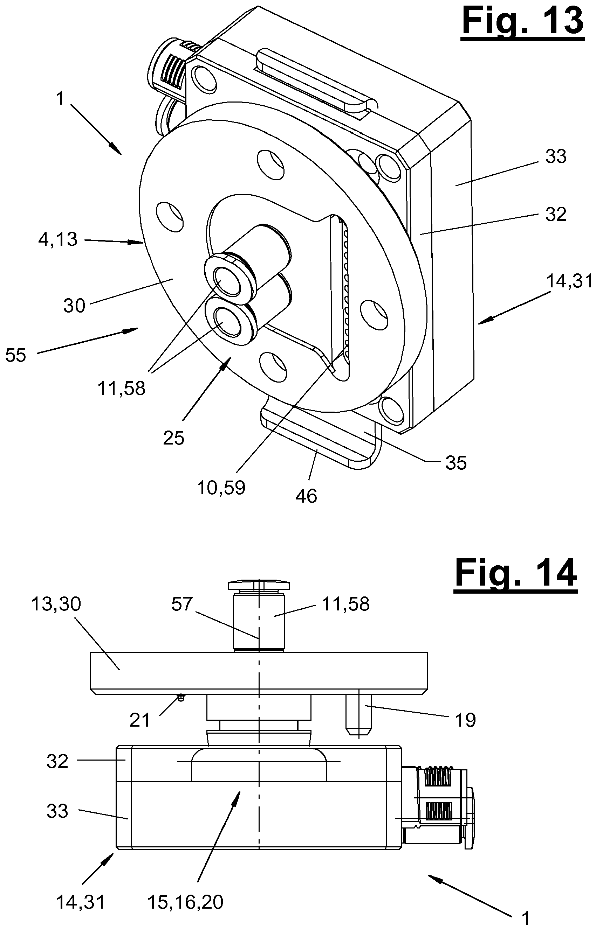

Figur 13 bis 17 zeigen eine Variante der Kupplungseinrichtung (1) von Figur 6 und 7. Die Unterschiede betreffen insbesondere die Ausbildung der Medienkupplung (16), der Drehsicherung (19) und des Sicherungselements (40). Figur 13 verdeutlicht dabei auch mit einer perspektivischen Ansicht eine Variante des roboterseitigen Leitungsanschlusses (25).

Der gezeigte Leitungsanschluss (25) eignet sich besonders für eine Ausbildung des roboterseitigen Kupplungsteils (13) als Abtriebselement (4) des Roboters (3). An der Rückseite oder Unterseite der Kupplungsplatte (30) sind eine Fluidkupplung (58) und ein Anschlussfeld (59) für die fluidischen und elektrischen Leitungen (11,10) der internen Leitungsführung (55) des Roboters (3) angeordnet. Wenn das Kupplungsteil (13) nicht das Abtriebselement (4) bildet, kann der Leitungsanschluss (25) in anderer geeigneter Weise ausgebildet sein. Bevorzugt wird hier, wie auch in den Ausführungsbeispielen, eine roboterseitige axiale Medienzuführung längs der Kupplungsachse (57) und werkzeugseitig eine umgelenkte seitliche Medienabführung.

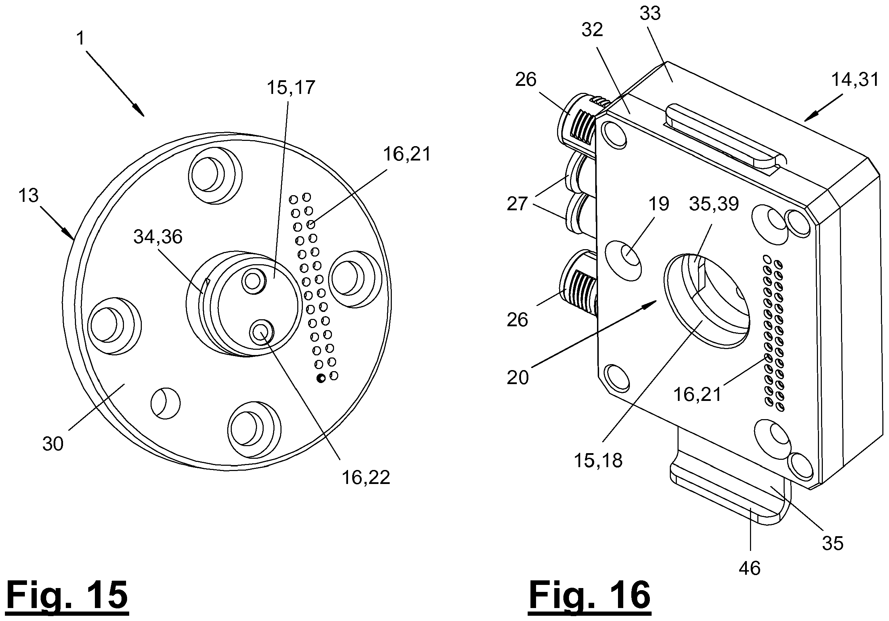

Gemäß Figur 15 bis 17 ist das fluidische Kupplungsmittel (22) am zentralen Zapfen (17) der mechanischen Kupplung (15) angeordnet. Die Ausbildung entspricht denjenigen von Figur 5, 6 und 7. Abgewandelt ist in diesem Ausführungsbeispiel das elektrische Kupplungsmittel (21), welches örtlich getrennt vom Zapfen (17) an den Kupplungsflanschen (30,31) angeordnet ist und von elektrischen Kontaktleisten mit federnden Elektrokontakten gebildet wird, die beim Ankuppeln in elektrisch leitenden und ggf. auch formschlüssigen Kontakt miteinander treten.

Figur 10 verdeutlicht hierzu in einem durchsichtigen Drahtmodell der geschlossenen Kupplungseinrichtung (1) die werkzeugseitige Leitungsdurchführung (29) und die Medienumlenkung. Die werkzeugseitigen elektrischen und fluidischen Leitungsanschlüsse (26,27) befinden sich auch in dieser Ausführungsform an einer Seitenwand des werkzeugseitigen Kupplungsteils (14).

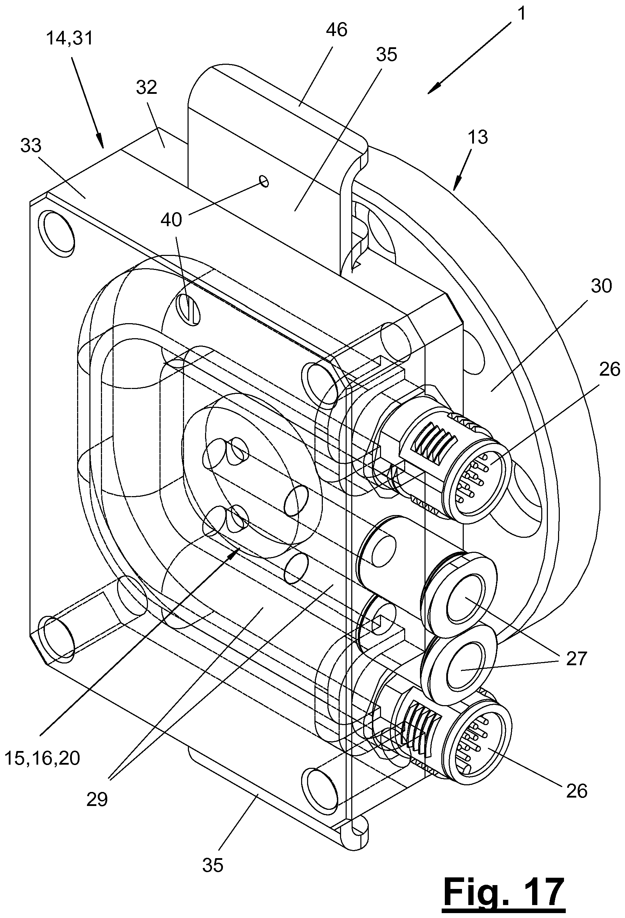

Figur 17 verdeutlicht außerdem eine andere Ausführungsform des Sicherungselements (40), welches hier als Federstift im Flanschteil (33) im Zusammenwirken mit einer oder zwei Rastöffnung(en) an der Riegelplatte (35) ausgebildet ist. Die Drehsicherung (19) wird in diesem Ausführungsbeispiel von einem Sicherungsstift am roboterseitigen Kupplungsflansch (30) und einer zugehörigen Aufnahmeöffnung am werkzeugseitigen Kupplungsflansch (31) gebildet. Figur 14 und 16 zeigen diese Anordnung.

In den vorbeschriebenen Ausführungsformen der Erfindung kommt jeweils ein Verfahren zum Kuppeln eines Werkzeugs (2) an einem Roboter (3) mittels einer Kupplungseinrichtung (1) zum Einsatz, wobei die Kupplungseinrichtung (1) mehrere miteinander verbindbare Kupplungsteile (13,14) mit einer mechanischen Kupplung (15) und einer Medienkupplung (16) aufweist und wobei die mechanische Kupplung (15) formschlüssig ineinander greifende Kupplungselemente (17,18) an den Kupplungsteilen (13,14) und eine zwischen den Kupplungselementen (17,18) wirkende Verriegelung (20) aufweist. Die Verriegelung (20) wird dabei durch eine Verlagerungsbewegung des Roboters (3) und der Kupplungseinrichtung (1) betätigt. Die Verlagerungsbewegung des Roboters (3) ist bevorzugt quer zur Kupplungsachse (57) der Kupplungseinrichtung (1) gerichtet. Die Verriegelung (20) weist in den besonders bevorzugten Varianten einen internen Betätiger (46) mit einem aus einem Kupplungsteil (13,14) ragenden Vorsprung auf, der zum Öffnen und Schließen der Verriegelung (20) mit einem relativ ortsfesten Anschlag (50) in Eingriff gebracht wird.

Figur 1 zeigt eine besonders bevorzugte Ausführungsform eines Roboters (3), der hier als Leichtbauroboter ausgebildet ist. Er besteht aus leichtgewichtigen Materialien, z.B. Leichtmetallen und Kunststoff und hat auch eine kleine Baugröße. Er hat ein niedriges Gewicht und eine entsprechend begrenzte Tragkraft, die z.B. bis zu 20 kg beträgt. Ein solcher Leichtbauroboter mit einem Gewicht von Roboter (3) und Werkzeug (2) von z.B. unter 50 kg, insbesondere von ca. 30 kg, kann mobil sein und kann sich manuell von einem Einsatzort zu einem anderen transportieren lassen. Für einen solchen Leichtbauroboter ist die vorbeschriebene Ausbildung des Werkzeugwechselsystems (1) mit dem geringen Werkzeuggewicht besonders vorteilhaft.

Figur 1 zeigt eine bevorzugte Ausführung des Roboters (3), der eine oder mehrere kraftgesteuerte oder kraftgeregelte Roboterachsen (I - VII) nebst einer zugeordneten und einwirkende Belastungen erfassenden Sensorik (12) aufweist. Der Roboter (3) kann außerdem mindestens eine nachgiebige Roboterachse (I - VII) mit einer Nachgiebigkeitsregelung, insbesondere einer reinen Kraftregelung oder einer Kombination aus Positions- und Kraftregelung aufweisen. Der gezeigte Roboter (3) ist als Gelenkarmroboter ausgebildet und hat z.B. sieben Roboterachsen (I - VII). Diese weisen jeweils ein Drehlager und einen hier zugeordneten steuerbaren oder regelbaren Antrieb nebst einer integrierten und durch einen Pfeil symbolierten Sensorik (12) auf. Die Roboterachsen (I - VII) können außerdem eine steuer- oder schaltbare Bremse aufweisen.

Der gezeigte Roboter (3) hat mehrere bewegliche und miteinander verbundene Glieder (5,6,7,8). Diese sind vorzugsweise gelenkig und über die besagten drehenden Roboterachsen (I - VII) miteinander verbunden. Ferner können einzelne Glieder (6,7) mehrteilig und in sich beweglich ausgebildet sein. Die Roboterachsen (I - VII) und ihre Achsantriebe, insbesondere Drehantriebe sowie die Sensorik (12), sind über eine Anschlussbox (56) mit einer Robotersteuerung (nicht dargestellt) verbunden, welche die Antriebe bzw. Achsantriebe steuern und regeln kann. Das abtriebseitige Endglied (5) des Roboters (3) ist z.B. als Roboterhand ausgebildet und weist ein um eine Drehachse (9) drehbares Abtriebselement (4), z.B. einen Abtriebsflansch, auf. Die Drehachse (9) bildet die letzte Roboterachse (VII).

Am Abtriebselement (4) kann das Kupplungsteil (13) montiert sein. Alternativ kann das Abtriebselement (4) als Kupplungsteil (13) ausgebildet sein. Das Kupplungsteil (13) mit den zugehörigen Teilen der mechanischen Kupplung (15) und der Medienkupplung (16) kann dadurch als Bestandteil der Handachse oder abtreibenden Roboterachse (VII) ausgebildet sein.

Durch ein hohles Abtriebselement (4) und ggf. andere Roboterglieder (5,6,7,8) können eine oder mehrere vorerwähnte Leitungen (10,11) für Betriebsmittel in gestrichelt dargestellten internen Leitungsführung (55) von der Anschlussbox (56) aus geführt sein und am Abtriebselement (4) nach außen treten. Sie können an dem zentralen und ggf. vom Abtriebselement (4) umgebenen Leitungsanschluss (25) angeschlossen werden.

Die vorgenannte Kraftsteuerung oder Kraftregelung der Roboterachsen (I-VII) bezieht sich auf die Wirkung nach außen am Abtriebselement (4) des Endglieds (5) sowie auf die dort einwirkenden Reaktionskräfte. Roboterintern findet an den drehenden Achsen oder Achsantrieben eine Momentensteuerung oder Momentenregelung statt.

Der Roboter (3) hat vorzugsweise drei oder mehr bewegliche Glieder (5,6,7,8). Im gezeigten Ausführungsbeispiel weist er ein mit einem Untergrund verbundenes Basisglied (8) und das vorerwähnte Endglied (5) sowie zwei Zwischenglieder (6,7) auf, welche mehrteilig und in sich verdrehbar mittels Achsen III und V ausgebildet sind. Die Zahl der Zwischenglieder (6,7) kann alternativ kleiner oder größer sein. In weiterer Abwandlung können einzelne oder alle Zwischenglieder (6,7) in sich drehfest und ohne zusätzliche Achse ausgebildet sein.

Die Sensorik (12) kann z.B. einen oder mehreren Sensoren an einer oder mehreren Achsen (I - VII) aufweisen. Diese Sensoren können die gleiche oder unterschiedliche Funktionen haben. Sie können insbesondere als Kraft- oder Momentensensoren ausgebildet sein und zum Erfassen von Belastungen, insbesondere Momenten, ausgebildet sein, die von außen auf den Roboter über das Abtriebselement (4) einwirken. Die Sensoren können ferner Drehbewegungen und ggf. Drehpositionen detektieren.

Mittels der Sensorik (12) kann von der Steuerung die vorgenannte Nachgiebigkeitsregelung realisiert werden. Hierdurch kann einerseits der Roboter (3) das Werkzeug (2) federnd und ausweichfähig halten und führen, wobei z.B. Crashs und insbesondere Unfälle mit Personen vermieden werden können. Die Eigenschaft kann auch zum manuellen Teachen und Programmieren benutzt werden mit dem Vorteil einer schnellen und einfachen Programmierung, Inbetriebnahme sowie Anpassbarkeit an unterschiedliche Werkzeuge (2) und damit auszuführende Prozesse und Jobs. Über eine Belastungserfassung der Sensorik (12) kann außerdem das Suchen und Finden von Arbeitspositionen und auch von der Kuppelstellung unterstützt und erleichtert werden. Auch Winkelfehler in der Relativstellung der Glieder (5,6,7,8) können detektiert und bedarfsweise korrigiert werden.

Die Sensorik (12) kann ferner zur Überprüfung der Formhaltigkeit und Funktionsfähigkeit der Werkzeuge (2) benutzt werden. Der Roboter (3) kann z.B. das Werkzeug (2) mit den zu überprüfenden Elementen, z.B. den Greiffingern, an einem Referenzpunkt mit bekannter Position in einen leichten Berührungskontakt bringen, wobei die Roboterbewegung und -position überwacht und eine Berührung mittels der Sensorik (12) detektiert wird. Durch die Nachgiebigkeitsregelung werden schadensträchtige Kollisionen vermieden und die Roboterbewegung bei Überschreiten einer vorgegebenen Belastungsschwelle gestoppt oder abgeschaltet. Durch Vergleich der Soll- und Istposition des Roboters bei mittels Sensorik (12) detektiertem Kontakt kann festgestellt werden, ob ein Werkzeug (2) intakt oder beschädigt ist und ob insbesondere der programmierte Tool-Center-Point (TCP) des Werkzeugs (2) sich noch an der vorgesehenen Position befindet.

Ferner kann beim An- und Abkuppeln durch Überwachung der aufgetretenen Belastungen die korrekte Funktion der Kupplungseinrichtung (1) und die korrekte Lage des Kupplungsteils (14) am Halter (48) kontrolliert werden. Auch die Wirkung des externen Betätigers bzw. Kraftelements (47) kann über eine Belastungsdetektion überwacht werden.

Abwandlungen der gezeigten und beschriebenen Ausführungsformen sind in verschiedener Weise möglich. Die Merkmale der verschiedenen Ausführungsbeispiele können miteinander kombiniert und auch gegenseitig vertauscht werden. Insbesondere kann die Zuordnung der Kupplungsteile (13,14) am Roboter (3) und zum Werkzeug (2) verändert werden. Auch die Zuordnung des beweglichen und eingreifenden Riegelelements (35) sowie des aufnehmenden Riegelelements (34) zu den Kupplungsteilen (13,14) und deren Kupplungselementen (17,18) kann verändert, insbesondere vertauscht werden. Die Verriegelung (20) der Kupplungseinrichtung (1) kann, insbesondere mittels des internen Betätigers (46), auch bedarfsweise manuell betätigt werden.

Auch der Roboter (3) kann eine beliebige andere Ausbildung haben. Er kann positionsgesteuerte Achsen aufweisen. Die Roboterachsen können translatorische und/oder rotatorische Achsen in beliebiger Zahl und Kombinationen sein.

Gegenstand der Erfindung sind außer der Kupplungseinrichtung (1) auch deren einzelne Kupplungsteile (13,14) jeweils für sich. Dies gilt insbesondere, wenn die Kupplungseinrichtung (1) eine standardisierte Roboter-Schnittstelle bildet und das roboterseitige Kupplungsteil (13) als Roboterteil, insbesondere als Abtriebselement (4), ausgebildet ist.

Das roboterseitige Kupplungsteil (13) kann die vorbeschriebene und in den Ansprüchen genannte Ausbildung haben. Hierbei ist es besonders vorteilhaft, wenn das roboterseitige Kupplungsteil (13) an der Vorderseite ein vorstehendes Kupplungselement (17) und eine Riegelöffnung (34) aufweist. Das roboterseitige Kupplungsteil (13) kann ferner an der Rückseite eine Fluidkupplung (58) und/oder eine elektrisches Anschlussfeld (59) für die fluidischen und/oder die elektrischen Leitungen (11,10) der internen Leitungsführung (55) des Roboters (3) aufweisen.

Das werkzeugseitige Kupplungsteil (14) kann ebenfalls die vorbeschriebene und in den Ansprüchen genannte Ausbildung haben. Hierbei ist es besonders vorteilhaft, wenn das werkzeugseitige Kupplungsteil (14) ein aufnehmendes Kupplungselement (18) und ein bewegliches Riegelelement (35) aufweist.

### BEZUGSZEICHENLISTE

- 1: Kupplungseinrichtung, Wechselkupplung
- 2: Werkzeug, Greifer
- 3: Roboter, Leichtbauroboter
- 4: Abtriebselement, Abtriebsflansch, Drehflansch
- 5: Glied, Endglied, Hand
- 6: Glied, Zwischenglied
- 7: Glied, Zwischenglied
- 8: Glied, Basisglied
- 9: Drehachse
- 10: Leitung roboterseitig, elektrisch
- 11: Leitung roboterseitig, fluidisch
- 12: Sensorik
- 13: Kupplungsteil roboterseitig
- 14: Kupplungsteil werkzeugseitig
- 15: mechanische Kupplung
- 16: Medienkupplung
- 17: Kupplungselement formschlüssig, Zapfen
- 18: Kupplungselement formschlüssig, Aufnahmeöffnung
- 19: Drehsicherung
- 20: Verriegelung
- 21: Kupplungsmittel elektrisch, Schleifkontakt, Kontaktleiste
- 22: Kupplungsmittel fluidisch, Rohrkupplung
- 23: Nut
- 24: Federelement
- 25: Leitungsanschluss roboterseitig
- 26: Leitungsanschluss werkzeugseitig, elektrisch
- 27: Leitungsanschluss werkzeugseitig, fluidisch
- 28: Leitungsdurchführung roboterseitig
- 29: Leitungsdurchführung werkzeugseitig
- 30: Kupplungsflansch, Kupplungsplatte roboterseitig
- 31: Kupplungsflansch, Kupplungsplatte werkzeugseitig
- 32: Flanschteil
- 33: Flanschteil
- 34: Riegelelement, Riegelöffnung
- 35: Riegelelement, Riegelstift, Riegelplatte
- 36: Nut tangential
- 37: Querbohrung
- 38: Ausschnitt
- 39: Rand
- 40: Sicherungselement, Raste
- 41: Führung für Riegelelement
- 42: Federarm
- 43: Federelement
- 44: Schwenkarm
- 45: Bolzen
- 46: Betätiger, Vorsprung
- 47: Betätiger, Magnet
- 48: Halter, Werkzeughalter
- 49: Aufnahmeöffnung
- 50: Anschlag
- 51: Magnethalter
- 52: Arbeitsvorrichtung
- 53: Werkzeugwechselsystem
- 54: Bereitstellung, Magazin
- 55: interne Leitungsführung
- 56: Basisanschluss, Anschlussbox
- 57: Kupplungsachse, Zentralachse, Zapfenachse
- 58: Fluidkupplung
- 59: Anschlussfeld

- I - VII: Achse von Roboter

## Patentansprüche

1. Kupplungseinrichtung für einen Roboter (3) und ein Werkzeug (2), wobei die Kupplungseinrichtung (1) mehrere miteinander verbindbare Kupplungsteile (13,14) mit einer mechanischen Kupplung (15) und einer Medienkupplung (16) aufweist, wobei die mechanische Kupplung (15) formschlüssig ineinander greifende Kupplungselemente (17,18) an den Kupplungsteilen (13,14) und eine zwischen den Kupplungselementen (17,18) wirkende Verriegelung (20) aufweist, **dadurch gekennzeichnet, dass** die Verriegelung (20) durch eine Verlagerungsbewegung des Roboters (3) und der Kupplungseinrichtung (1) betätigbar ist.

2. Kupplungseinrichtung nach Anspruch 1, **dadurch gekennzeichnet, dass** die Medienkupplung (16) zumindest teilweise an den formschlüssig ineinander greifenden Kupplungselemente (17,18) angeordnet ist.

3. Kupplungseinrichtung nach Anspruch 1 oder 2, **dadurch gekennzeichnet, dass** die Verriegelung (20) durch eine Relativbewegung gegenüber einem Werkzeughalter (48) betätigbar ist.

4. Kupplungseinrichtung nach Anspruch 1, 2 oder 3, **dadurch gekennzeichnet, dass** die Verriegelung (20) formschlüssig ineinander greifende und relativ zueinander bewegliche Riegelelemente (34,35) an den Kupplungsteilen (13,14) aufweist.

5. Kupplungseinrichtung nach einem der vorhergehenden Ansprüche, **dadurch gekennzeichnet, dass** eine Medienkupplung (16) elektrische und/oder fluidische Kupplungsmittel (21,22) aufweist.

6. Kupplungseinrichtung nach einem der vorhergehenden Ansprüche, **dadurch gekennzeichnet, dass** interne Leitungsdurchführungen (28,29) der Medienkupplung (16) zumindest teilweise an den formschlüssig ineinander greifenden Kupplungselementen (17,18) angeordnet sind.

7. Kupplungseinrichtung nach einem der vorhergehenden Ansprüche, **dadurch gekennzeichnet, dass** ein roboterseitiges Kupplungsteil (13) einen zentral angeordneten Leitungsanschluss (25) aufweist.

8. Kupplungseinrichtung nach einem der vorhergehenden Ansprüche, **dadurch gekennzeichnet, dass** die Kupplungsteile (13,14) eine Drehsicherung (19) aufweisen.

9. Kupplungseinrichtung nach einem der vorhergehenden Ansprüche, **dadurch gekennzeichnet, dass** ein Kupplungsteil (13) als Abtriebselement (4) eines Roboters (3) ausgebildet ist.

10. Verfahren zum Kuppeln eines Werkzeugs (2) an einem Roboter (3) mittels einer Kupplungseinrichtung (1), die mehrere miteinander verbindbare Kupplungsteile (13,14) mit einer mechanischen Kupplung (15) und einer Medienkupplung (16) aufweist, wobei die mechanische Kupplung (15) formschlüssig ineinander greifende Kupplungselemente (17,18) an den Kupplungsteilen (13,14) und eine zwischen den Kupplungselementen (17,18) wirkende Verriegelung (20) aufweist, **dadurch gekennzeichnet, dass** die Verriegelung (20) durch eine Verlagerungsbewegung des Roboters (3) und der Kupplungseinrichtung (1) betätigt wird.

11. Arbeitsvorrichtung mit einem mehrachsigen programmierbaren Roboter (3), einer Kupplungseinrichtung (1) und einem Werkzeug (2) **dadurch gekennzeichnet, dass** die Kupplungseinrichtung (1) nach mindestens einem der Ansprüche 1 bis 9 ausgebildet ist.

12. Arbeitsvorrichtung nach Anspruch 11, **dadurch gekennzeichnet, dass** der Roboter (3) eine oder mehrere kraftgesteuerte oder kraftgeregelte Roboterachsen (I - VII) mit einer zugeordneten, einwirkende Belastungen erfassenden Sensorik (12) aufweist.

13. Arbeitsvorrichtung nach Anspruch 11 oder 12, **dadurch gekennzeichnet, dass** der Roboter (3) mindestens eine nachgiebige Achse (I - VII) mit einer Nachgiebigkeitsregelung, insbesondere einer reinen Kraftregelung oder einer Kombination aus Positions- und Kraftregelung, aufweist.

14. Arbeitsvorrichtung nach Anspruch 11, 12 oder 13, **dadurch gekennzeichnet, dass** der Roboter (3) eine interne Leitungsführung (55) mit fluidischen und/oder elektrischen Leitungen (10,11) durch seine Glieder (5,6,7,8) aufweist, die mit einem Leitungsanschluss (25) am Kupplungsteil (13) verbunden ist/sind.

15. Arbeitsvorrichtung nach einem der Ansprüche 11 bis 14, **dadurch gekennzeichnet, dass** die Arbeitsvorrichtung (1) einen Werkzeughalter (48) mit einer Aufnahmeöffnung (49) für die formschlüssige Aufnahme von einem Werkzeug (2) aufweist.

## Claims

1. Coupling device for a robot (3) and a tool (2), wherein the coupling device (1) has a plurality of mutually connectable coupling parts (13, 14) with a mechanical coupling (15) and a media coupling (16), wherein the mechanical coupling (15) has coupling elements (17, 18) on the coupling parts (13, 14), said coupling elements (17, 18) engaging in one another in a form-fitting manner, and a lock (20) that acts between the coupling elements (17, 18), **characterized in that** the lock (20) is actuable by a displacement movement of the robot (3) and of the coupling device (1).

2. Coupling device according to Claim 1, **characterized in that** the media coupling (16) is arranged at least partially on the coupling elements (17, 18) that engage in one another in a form-fitting manner.

3. Coupling device according to Claim 1 or 2, **characterized in that** the lock (20) is actuable by a relative movement with respect to a tool holder (48).

4. Coupling device according to Claim 1, 2 or 3, **characterized in that** the lock (20) has locking elements (34, 35) on the coupling parts (13, 14), said locking elements (34, 35) engaging in one another in a form-fitting manner and being movable relative to one another.

5. Coupling device according to one of the preceding claims, **characterized in that** a media coupling (16) has electrical and/or fluidic coupling means (21, 22).

6. Coupling device according to one of the preceding claims, characterized that internal line bushings (28, 29) of the media coupling (16) are arranged at least partially on the coupling elements (17, 18) that engage in one another in a form-fitting manner.

7. Coupling device according to one of the preceding claims, **characterized in that** a robot-side coupling part (13) has a centrally arranged line connector (25).

8. Coupling device according to one of the preceding claims, **characterized in that** the coupling parts (13, 14) have an anti-rotation device (19).

9. Coupling device according to one of the preceding claims, **characterized in that** a coupling part (13) is configured as a drive-output element (4) of a robot (3).

10. Method for coupling a tool (2) to a robot (3) by means of a coupling device (1) which has a plurality of mutually connectable coupling parts (13, 14) with a mechanical coupling (15) and a media coupling (16), wherein the mechanical coupling (15) has coupling elements (17, 18) on the coupling parts (13, 14), said coupling elements (17, 18) engaging in one another in a form-fitting manner, and a lock (20) that acts between the coupling elements (17, 18), **characterized in that** the lock (20) is actuated by a displacement movement of the robot (3) and of the coupling device (1).

11. Work apparatus having a multiaxial programmable robot (3), a coupling device (1) and a tool (2), **characterized in that** the coupling device (1) is configured according to at least one of Claims 1 to 9.

12. Work apparatus according to Claim 11, **characterized in that** the robot (3) has one or more force-controlled or force-regulated robot axes (I-VII) with an associated sensor system (12) that senses acting loads.

13. Work apparatus according to Claim 11 or 12, **characterized in that** the robot (3) has at least one flexible axis (I-VII) with flexibility regulation, in particular pure force regulation or a combination of position regulation and force regulation.

14. Work apparatus according to Claim 11, 12 or 13, **characterized in that** the robot (3) has an internal line guide (55) with fluidic and/or electrical lines (10, 11) through its members (5, 6, 7, 8), which is/are connected to a line connector (5) on the coupling part (13).

15. Work apparatus according to one of Claims 11 to 14, **characterized in that** the work apparatus (1) has a tool holder (48) with a receiving opening (49) for receiving a tool (2) in a form-fitting manner.

## Revendications

1. Dispositif d'accouplement pour un robot (3) et un outil (2), dans lequel le dispositif d'accouplement (1) présente plusieurs parties d'accouplement pouvant être assemblées l'une à l'autre (13, 14) avec un couplage mécanique (15) et un couplage de fluides (16), dans lequel le couplage mécanique (15) présente sur les parties d'accouplement (13, 14) des éléments d'accouplement (17, 18) s'engageant l'un dans l'autre par emboîtement et un verrouillage (20) agissant entre les éléments d'accouplement (17, 18), **caractérisé en ce que** le verrouillage (20) peut être actionné par un mouvement de déplacement du robot (3) et du dispositif d'accouplement (1).

2. Dispositif d'accouplement selon la revendication 1, **caractérisé en ce que** le couplage de fluides (16) est disposé au moins en partie sur les éléments d'accouplement (17, 18) s'engageant l'un dans l'autre par emboîtement.

3. Dispositif d'accouplement selon la revendication 1 ou 2, **caractérisé en ce que** le verrouillage (20) peut être actionné par un mouvement relatif par rapport à un porte-outil (48).

4. Dispositif d'accouplement selon la revendication 1, 2 ou 3, **caractérisé en ce que** le verrouillage (20) présente sur les parties d'accouplement (13, 14) des éléments de verrou (34, 35) s'engageant l'un dans l'autre par emboîtement et mobiles l'un par rapport à l'autre.

5. Dispositif d'accouplement selon l'une quelconque des revendications précédentes, **caractérisé en ce qu'**un couplage de fluides (16) présente des moyens de couplage électriques et/ou fluidiques (21, 22).

6. Dispositif d'accouplement selon l'une quelconque des revendications précédentes, **caractérisé en ce que** des passages de conduites internes (28, 29) du couplage de fluides (16) sont disposés au moins en partie sur les éléments d'accouplement (17, 18) s'engageant l'un dans l'autre par emboîtement.

7. Dispositif d'accouplement selon l'une quelconque des revendications précédentes, **caractérisé en ce qu'**une partie d'accouplement côté robot (13) présente un raccord de conduite (25) disposé au centre.

8. Dispositif d'accouplement selon l'une quelconque des revendications précédentes, **caractérisé en ce que** les parties d'accouplement (13, 14) présentent un blocage contre la rotation (19).

9. Dispositif d'accouplement selon l'une quelconque des revendications précédentes, **caractérisé en ce qu'**une partie d'accouplement (13) est réalisée sous forme d'élément de sortie (4) d'un robot (3).

10. Procédé d'accouplement d'un outil (2) à un robot (3) au moyen d'un dispositif d'accouplement (1), qui présente plusieurs parties d'accouplement (13, 14) pouvant être assemblées l'une à l'autre avec un couplage mécanique (15) et un couplage de fluides (16), dans lequel le couplage mécanique (15) présente sur les parties d'accouplement (13, 14) des éléments d'accouplement (17, 18) s'engageant l'un dans l'autre par emboîtement et un verrouillage (20) agissant entre les parties d'accouplement (17, 18), **caractérisé en ce que** l'on actionne le verrouillage (20) par un mouvement de déplacement du robot (3) et du dispositif d'accouplement (1).

11. Dispositif de travail avec un robot multiaxe programmable (3), un dispositif d'accouplement (1) et un outil (2), **caractérisé en ce que** le dispositif d'accouplement (1) est réalisé selon au moins une des revendications 1 à 9.

12. Dispositif de travail selon la revendication 11, **caractérisé en ce que** le robot (3) présente un ou plusieurs axe(s) de robot commandé(s) par force ou régulé(s) par force (I - VII) avec des capteurs associés (12) détectant des charges agissantes.

13. Dispositif de travail selon la revendication 11 ou 12, **caractérisé en ce que** le robot (3) présente au moins un axe flexible (I - VII) avec une régulation de la flexibilité, en particulier une régulation par force pure ou une combinaison de régulation par position et par force.

14. Dispositif de travail selon la revendication 11, 12 ou 13, **caractérisé en ce que** le robot (3) présente un guidage de conduites interne (55) avec des conduites fluidiques et/ou électriques (10, 11) à travers ses éléments (5, 6, 7, 8), qui est/sont raccordée(s) à un raccord de conduite (25) sur la partie d'accouplement (13).

15. Dispositif de travail selon l'une quelconque des revendications 11 à 14, **caractérisé en ce que** le dispositif de travail (1) présente un porte-outil (48) avec une ouverture de réception (49) pour la réception par emboîtement d'un outil (2).
